(19) Europäisches Patentamt
European Patent Office
Office européen des brevets

(11) **EP 3 181 920 A1**

(12) **EUROPEAN PATENT APPLICATION**
published in accordance with Art. 153(4) EPC

(43) Date of publication:
**21.06.2017 Bulletin 2017/25**

(21) Application number: **15831726.3**

(22) Date of filing: **13.08.2015**

(51) Int Cl.:
***F16B 39/24*** (2006.01)          ***F16B 39/26*** (2006.01)
***F16B 43/00*** (2006.01)

(86) International application number:
**PCT/KR2015/008508**

(87) International publication number:
**WO 2016/024837 (18.02.2016 Gazette 2016/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **13.08.2014  KR 20140105176
31.10.2014  KR 20140149982**

(71) Applicant: **Lee, Sangcheol
Goyang-si, Gyeonggi-do 10440 (KR)**

(72) Inventor: **Lee, Sangcheol
Goyang-si, Gyeonggi-do 10440 (KR)**

(74) Representative: **Groth & Co. KB
P.O. Box 6107
102 32 Stockholm (SE)**

(54) **WASHER FOR PREVENTING LOOSENING**

(57)    The main purpose of the present invention is to provide a washer for preventing loosening which enables a sloped surface of the washer and a nut to directly contact so that when the nut rotates in the loosening direction, a wedge effect is always ensured due to the sloped surface of the washer. The washer for preventing loosening according to the present invention, which has been developed in order to achieve the above purpose, comprises: a washer body part which has a bolt insertion hole formed in the center thereof and enables a bolt head or a nut to be seated on the upper surface thereof; a catching protrusion at which the edge part of the bolt head or the nut is caught when the bolt or nut rotates in the tightening direction on the upper surface of the washer body part; and a sloped surface which comes into contact with the bolt head or the bottom surface of the nut when the bolt or nut rotates in the loosening direction on the upper surface of the washer body part and then enables the bolt head or nut to move up along the sloped surface.

Figure 2

**Description**

**Technical Field**

The present invention relates to a washer for preventing loosening, and in particular to a washer for preventing loosening which is able to prevent the loosening of a bolt or a nut in such a way to use a sloped surface.

**Background Art**

When it needs to engage components using a bolt or a predetermined engaging member, a washer, in general, is interposed between a typical component and a bolt or a nut, thus increasing an engaging strength and preventing the loosening of such components. The aforementioned washer may be categorized into a plain washer and a spring washer.

The plain washer allows for the good mounting of a bolt head or a nut when engaging the bolt and nut to a soft member, for example, a wooden component. The spring washer may contribute to the prevention of loosening of the bolt and the nut since it provides a cushioning function with respect to any change in confining pressure in the direction of a screw axis which is applied to the bolt and the nut even when the member engaged through the bolt and the nut receives vibrations or external impact, using an elastic recovery force. The elastic recovery force of the spring washer is relatively smaller than the confining pressure of the bolt or the nut, and as time passes by, the elastic recovery force may be reduced, for which the loosening prevention function may have a limit.

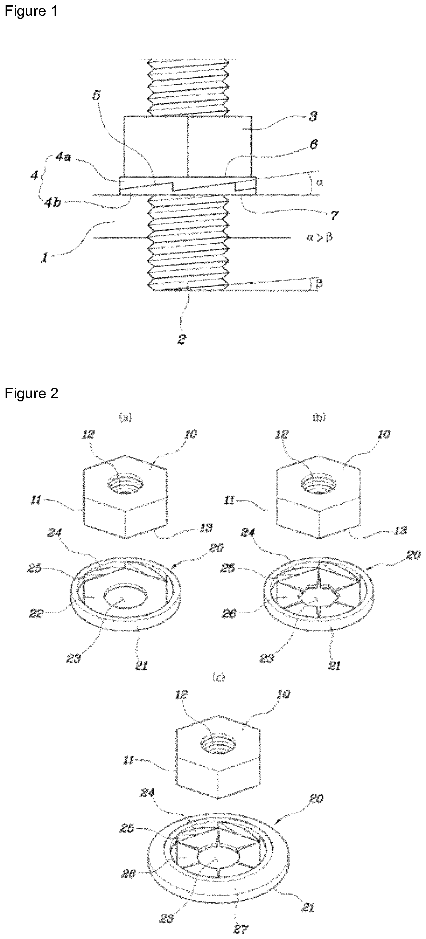

As an example structure of the washer which is most widely used in recent years since it is able to enhance the effects of a loosening prevention, there is a Nord-lock loosening prevention system illustrated in Figure 1. The Nord-lock loosening prevention washer 4 is engaged inserted between the bolt 2 and the nut 3 which are employed to engage a pair of parent materials 1, more specifically, between the nut 3 and the parent materials 1.

The aforementioned Nord-lock loosening prevention washer 4 is formed of an upper washer plate 4a and a lower washer plate 4b. A tooth-shaped sloped surface is formed in the circumferential direction at a facing surface in order for a pair of the upper and lower washer plates 4a and 4b to be engaged oblique with each other. The sloped angle ($\alpha$) where the tooth-shaped sloped surfaces 5 are engaged is determined always to be larger than the sloped angle ($\beta$) of the screw to which the bolt 2 and the nut 3 are engaged. If the bolt 2 and the nut 3 are rotated in the tightening direction, they are tightly engaged into a state where the tooth-shaped sloped surfaces of the upper washer plate 4a and the lower washer plate 4b are fit tightly.

[6] Since the sloped angle ($\alpha$) where the sloped surfaces of the washer are engaged, is larger than the sloped angle ($\beta$) of the screw thread to which the bolt 2 and the nut 3 are engaged, if the nut 3 is rotated in the loosening direction by vibrations or an external force, the travel distance in the direction where the upper washer plate 4a moves forwardly along the tooth-shaped sloped surface may be larger than the travel distance in the direction of the bolt screw axis where the nut 3 moves forward along the screw thread. Consequently, the washer plate 4a may press the nut 3, and a wedging effect wherein an increasing friction resistance moment inhibits the rotation in the direction where the nut 3 is loosened, can occur, thus inhibiting the loosening.

If this Nord-lock loosening prevention washer is adapted, and a sliding occurs only between the upper washer plate 4a and the lower washer plate 4b, it may be possible to semi-permanently prevent the loosening of the nut unless the screw threads between the bolt and the nut is damaged or the sloped surface of the washer is damaged.

The loosening prevention principle of the Nord-lock loosening prevention washer 4 can be defined assuming that when the nut 3 is rotated in the loosening direction, the nut 3 and the upper washer plate 4a may be integrated and rotate together by the friction resistance force which occurs between the bottom surface of the nut 3 and the upper surface of the upper washer plate 4a. If the nut 3 actually rotates in the loosening direction, since the nut 3 may move in the direction where the contacting surface between the nut 3 and the upper washer plate 4a is spaced apart, the confining pressure at the contact surface and the friction resistance force related thereto may be quickly reduced, for which the upper washer plate 4a may not rotate together with the nut 3, thus losing the loosening prevention function.

If the difference between the friction coefficients between each contact surface is not large, the horizontal surface may first start sliding as compared to the sloped surface, for which the sliding will first occur at the horizontal contact surface 6 between the nut 3 and the upper washer plate 4a and at the horizontal contact surface 7 between the lower washer plate 4b and the parent material 1 as compared to the sloped contact surface 5 between the upper washer plate 4a and the lower washer plate 4b, whereby the wedging effect of the Nord-lock washer may not work as desired.

Meanwhile, in order to prevent the phenomenon where a sliding first occurs at the horizontal contact surfaces 6 and 7 rather than at the sloped contact surface 5 in the Nord-lock washer, protrusions are formed at the upper surface of the upper washer plate 4a or the bottom surface of the lower washer plate 4b according to an example of the conventional technology in an effort to reduce the area of the contacting surface between the members. Since the friction resistance force, however, is determined only based on the confining pressure in the vertical direction and the friction coefficient, it does not have any relation with the area of the contact surface between the members. For this reason, even though the protrusions are formed on the bottom surface of the washer, the friction resistance force does not increase.

Moreover, if the parent material or the nut is made of a material having high compression strength, for example, a metal, a ceramic material, etc., the protrusions of the washer may not be embedded in the parent material or the nut, for which it is impossible to expect any resisting effect to the reverse rotations.

Even when a compression deformation may occur at the bottom surface of the nut when tightening the nut, if the washer rotates together with the nut, it may rotate together with the nut when it is loosened, which makes useless the function of the loosening prevention. If the washer does not rotate together with the nut, the bottom surface of the nut is compressed and deformed in a shape where it is grooved long in the rotation direction. For this reason, the function of the protrusions formed to prevent the loosening of the nut cannot be available.

Since the area of the horizontal contact surface between the nut and the washer is determined in the Nord-lock washer based on the area of the bottom surface of the nut, even in the case when the diameter of the washer is made bigger than the diameter of the nut, there may be a limit in increasing the effects of the friction resistance moment of the horizontal contact surface 6 for the sake of a loosening prevention in the Nord-lock washer.

Moreover, since the Nord-lock loosening prevention washer should be installed in pairs, the work at a construction site may become complicated, and the purchase cost of the product may be high, and the economic feasibility may become bad.

## Disclosure of Invention

Accordingly, the present invention is made in an effort to resolve the problems of the Nord-lock anti-loosening washer. It is an object of the present invention to provide a washer for preventing the loosening of a bolt or a nut wherein only one loosening prevention washer is used, wherein a bolt or a nut is able to directly contact with the sloped surface of a washer, and when the bolt or the nut is relatively rotated in the direction where the bolt or the nut is loosened, a sliding always occurs only at the sloped contact surface with the washer, thus obtaining a wedging effect.

To achieve the above objects, there is provided a loosening prevention washer, which may include, but is not limited to, a washer body part wherein a bolt insertion hole is formed in the center of the washer body part, and a bolt head or a nut is mounted on the upper surface of the washer body part; an engaging shoulder which is formed on the upper surface of the washer body part in such a way that the corner part of the bolt head or nut is caught by the engaging shoulder when the bolt or nut is rotated in the tightening direction; and a sloped surface which is formed at the upper surface of the washer body part in such a way that the sloped surface can contact with the bottom surface of the bolt head or the surface of the nut when the bolt or the surface of the nut is rotated in the loosening direction, and the bolt head or the surface of the nut can get on the sloped surface.

Moreover, a plurality of the engaging shoulders and a plurality of the sloped surfaces are formed along a circumferential direction of a circle which can be drawn with a constant radius about the central axis of the bolt insertion hole.

In addition, the engaging shoulder is formed matching one to one at each corner part of the polygonal bolt head or nut.

Furthermore, the sloped surface is formed in such a way that the travel distance in the direction of the bolt screw axis that the bolt head or nut gets on the sloped surface and moves up forward is larger than the travel distance in the direction of the bolt screw axis that the bolt head or nut moves up forward along the screw thread when the bolt or nut is rotated in the loosening direction.

Moreover, the sloped surface includes a sloped surface of a side surface formed out of a line corresponding to the corner part of each bottom surface of the nut, and a bottom sloped surface which is formed extending inside the line corresponding to the corner part of each bottom surface of the nut.

In addition, the washer body part includes an insertion fixing piece which is formed sloped downward or upward in the direction of the central axis of the bolt insertion hole and is fit into the screw thread of the bolt in a state where the bolt or nut has been tightened.

Furthermore, the washer body part includes a flange part formed along the circumference thereof.

Moreover, the washer body part is polygonal.

In addition, the bottom surface of the washer body part is provided with a bottom protrusion part which is formed protruding downward along the edge thereof.

Furthermore, a plurality of bottom fixing protrusions is formed in a pointed shape in the downward direction at the bottom surface of the washer body part.

Moreover, the engaging shoulder and the sloped surface are integrated by a sloped and bent piece which is manufactured in such a way to cut a part of the body part of the washer which is formed in a flat plate shape into a predetermined shape along the corner line of the bolt head or nut, and the cut portion is bent upward.

In addition, the engaging shoulder and the sloped surface are formed integrate at the upper surface of the body part of the washer formed in a flat plate shape by means of a sloped protrusion piece which protrudes with a predetermined length along the corner line of the bolt head or nut.

## Advantageous Effects of the Invention

According to the washer for preventing loosening of the present invention, when a bolt or a nut is rotated in the loosening direction, a bolt head or the nut may directly move up along the sloped surface of the washer, for which both of the confining pressure and the friction resistance moment both in the screw axis direction of the bolt or the nut may greatly increase, and the wedging effects coming from the increased friction resistance moment may completely inhibit the loosening of the bolt or the nut.

Moreover, the flange part formed extending from the circumference of the washer body part and the bottom protrusion part formed protruding along the edge from the bottom surface of the washer body part may allow to increase a friction resistance moment between the washer and the parent material. Moreover, an insertion fixing piece formed along the circumference of the bolt insertion hole of the washer is able to strongly bite the bolt in a state where the nut has been tightened to the maximum, by which a friction resistance moment resisting against the relative rotation between the washer and the bolt can be generated.

Furthermore, a loosening prevention assistant shoe into which the bolt head or the nut is inserted, is able to compensate for a difference in terms of a standard shape (a quadrangular shape, a hexagonal shape, etc.) between the bolt head or the nut and the washer, and since a washer having a diameter larger than that of the bolt head or the nut is employed, the friction resistance moment between the washer and the parent material can be more increased.

Consequently, the sliding may first occur at the sloped contact surface between the nut and the washer as compared to the horizontal contact surface between the washer and the parent material. In this way, the wedging effects coming from the increased friction resistance moment between the nut and the sloped surface of the washer can be more surely obtained.

In addition, as compared to the conventional technology wherein in case of the Nord-lock washer, the washer according to the present invention is able to carry out the loosening prevention function in such a way to use only one washer, whereby the productivity at the construction site can be enhanced, and the purchase cost for the washer can be saved.

## Brief Description of Drawings

The present invention will become better understood with reference to the accompanying drawings which are given only by way of illustration and thus are not limitative of the present invention, wherein;

Figure 1 is a view illustrating a conventional Nord-lock loosening prevention washer;

Figure 2 is a view illustrating a loosening prevention washer according to the present invention;

Figure 3 is a view illustrating a loosening prevention washer according to another embodiment of the present invention;

Figure 4 is a view illustrating a loosening prevention washer according to further another embodiment of the present invention;

Figure 5 is a view illustrating a detailed configuration of a loosening prevention washer according to the present invention;

Figure 6 is a view illustrating a detailed configuration of a loosening prevention washer according to further another embodiment of the present invention;

Figure 7 is a view illustrating the configuration of a sloped washer of a loosening prevention washer according to the present invention;

Figure 8 is a view illustrating a detailed configuration of a loosening prevention washer according to still further another embodiment of the present invention;

Figure 9 is a view illustrating a detailed configuration of a loosening prevention washer according to still further another embodiment of the present invention, wherein the washer in Figure 8 has been modified;

Figure 10 is a view illustrating a contacting state with a washer when a loosening prevention washer and a nut rotate according to the present invention;

Figure 11 is a view illustrating a contacting state with a washer when a loosening prevention washer and a nut rotate according to another embodiment of the present invention;

Figure 12 is a view illustrating a first modified example of a sloped surface and an engaging shoulder in a loosening prevention washer according to the present invention;

Figure 13 is a view illustrating a second modified example of a sloped surface and an engaging shoulder in a loosening prevention washer according to the present invention;

Figure 14 is a view illustrating a third modified example of a sloped surface and an engaging shoulder in a loosening prevention washer according to the present invention;

Figure 15 is a view illustrating a fourth modified example of a sloped surface and an engaging shoulder in a loosening prevention washer according to the present invention;

Figure 16 is a view illustrating a fifth modified example of a sloped surface and an engaging shoulder in a loosening prevention washer according to the present invention;

Figure 17 is a view illustrating a stress distribution of a conventional Nord-lock loosening prevention washer;

Figure 18 is a view illustrating a rotation moment distribution of a conventional Nord-lock loosening prevention washer;

Figure 19 is a view illustrating an engaged state between a loosening prevention washer and a nut according to the present invention;

Figure 20 is a view illustrating a stress distribution of a loosening prevention washer according to the present invention;

Figure 21 is a view illustrating a rotation moment distribution of a loosening prevention washer according to the present invention;

Figure 22 is a view illustrating an insertion fixing piece of a loosening prevention washer according to the present invention;

Figure 23 is a view illustrating an insertion fixing piece according to another embodiment of the present invention;

Figure 24 is a view illustrating variously modified examples of an insertion fixing piece according to the present invention;

Figure 25 is a view illustrating a quadrangular assistant shoe according to the present invention;

Figure 26 is a view illustrating a hexagonal assistant shoe according to the present invention; and

Figure 27 is a view illustrating a bottom fixing protrusion according to the present invention.

**Best Modes for currying out the invention**

The preferred embodiments of the present invention will be described with reference to the accompanying drawings.

Figure 2 is a view illustrating a loosening prevention washer according to an embodiment of the present invention. Referring to Figure 2, the loosening prevention washer 20 may include, but is not limited to, a plate-shaped washer body part 21 wherein a bolt insertion hole 23 is formed in the middle thereof, and a nut 10 is mounted at an upper surface 22; an engaging shoulder 25 configured on the upper surface 22 of the washer body part 21 in such a way that an outer side corner part 11 of a nut 10 is caught by the engaging shoulder 25 when the nut 10 is rotated in the direction where it is tightened; and a sloped surface 24 which is formed on the upper surface 22 of the washer body part 21 in such a way that when the nut 10 is rotated in the direction where the nut 10 is loosened, the sloped surface 24 is able to contact with the bottom surface of the nut 10, more specifically, the bottom surface corner part 13 of the nut 10 climes up the sloped surface.

Figure 2A is a view illustrating the most basic aspect of the loosening prevention washer 20 according to the present invention. In this loosening prevention washer 20, only a bolt insertion hole 23 may be formed at the upper surface 22 of the washer body unit 21, namely, other processing is not carried out thereon. For this reason, the upper surface 22 of the washer body part 21 allows to carry out only the function wherein the nut 10 is mounted on the upper surface 22 thereof. Preferably, the upper surface 22 of the loosening prevention washer 20 may be formed in the shape same as a nut (a quadrangular shape or a hexagonal shape) or similar therewith, thus stably mounting the nut 10.

If the screw thread 12 formed on the inner circumferential surface of the nut 10 is tightened in a state it has been engaged with the screw thread of the bolt (not illustrated), the corner part 11 of the outer side surface of the nut 10 is caught by the engaging shoulder 25 of the loosening prevention washer 20, for which the loosening prevention washer 20 can rotate together with the nut 10. Since the nut 10 and the washer 20 are not compressed to the parent material at an initial stage, a friction force may not be present. In this state, it can well rotate even though a part thereof is caught. As the nut 10 is gradually tightened, the corner part 11 of a corresponding outer side surface of the nut may be caught deeper by the engaging shoulder 25, so it can withstand a larger tightening force.

The corner part 11 of the outer side surface of the nut 10 caught by the engaging shoulder 25 is referred to a portion of an outer side surface near the corner which may be formed as the outer side surfaces of the polygonal pillar-shaped nut meet each other. In contrast, the corner part 13 of the bottom surface of the nut 10 is referred to a portion of the bottom surface neat the corner which may be formed along the line where each outer side surface of the polygonal pillar-shaped nut meets the bottom surface. The corner part 11 of the outer side surface of the nut 10 is referred to a portion which is caught by the engaging shoulder 25 of the loosening prevention washer 20 when the nut 10 is rotated in the tightening direction, and the corner part 11 of the bottom surface of the nut 10 is referred to a portion where the nut 10 moves up along the sloped surface 24 of the loosening prevention washer 20 when the nut 10 rotates in the loosening direction.

The sloped surface 24 is a part which is newly adapted to prevent the loosening of the nut, which corresponds to a technical feature of the present invention. It may be configured in such a way that when the nut 10 is rotated in the loosening direction on the upper surface of the washer body part 21, it contacts with the corner part 13 of the bottom surface of the nut 10, and the nut 10 moves up along the sloped surface 24. In this way, the washer of the present invention may differ from the conventional Nord-lock loosening prevention washer in the way that the sloped surface 24 according to the present invention directly contacts with the nut 10 which is the target of the loosening prevention.

Moreover, if the nut 10 is rotated in the loosening direction, the sloped surface 24 may be configured in such a way that the travel distance in the direction of the bolt screw axis where the nut 10 moves up forwardly along the sloped surface 24 is larger than the travel distance in the direction of the bolt screw axis where the nut 10 moves up the screw thread forwardly. Consequently, even though the nut 10 is rotated in the loosening direction, a confining pressure generated when the nut 10 presses the washer 20 and the parent material in the screw axis direction of the bolt, namely, in the central shaft direction of the nut by means of the sloped surface, makes the nut fixed without being loosened anymore.

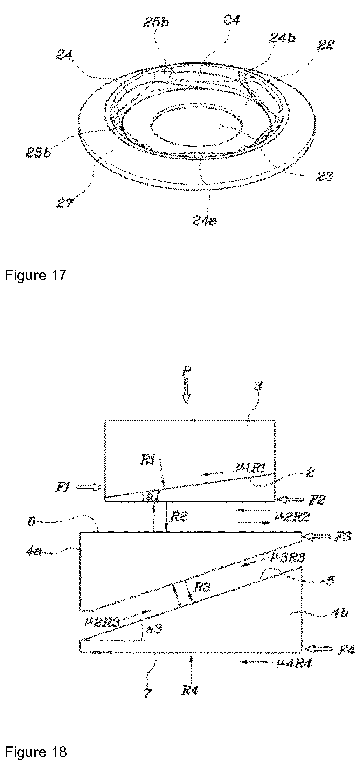

If the loosening prevention washer 20 according to the present invention is used, the loosening of the nut 10 can be prevented semi-permanently unless the screw thread of the nut 10 or the sloped surface of the loosening prevention washer 20 is broken. The detailed descriptions on the confining pressure of the nut 10 which occurs by the sloped surface 24 will be provided later with reference to Figures 17 to 21.

Figure 2B is a view illustrating a loosening prevention washer 20 according to another embodiment of the present invention. Since this loosening prevention washer 20 is formed of a washer body part 21, an engaging shoulder 25 and a sloped surface 24, the components thereof are same as Figure 2A, so the descriptions thereof will be omitted.

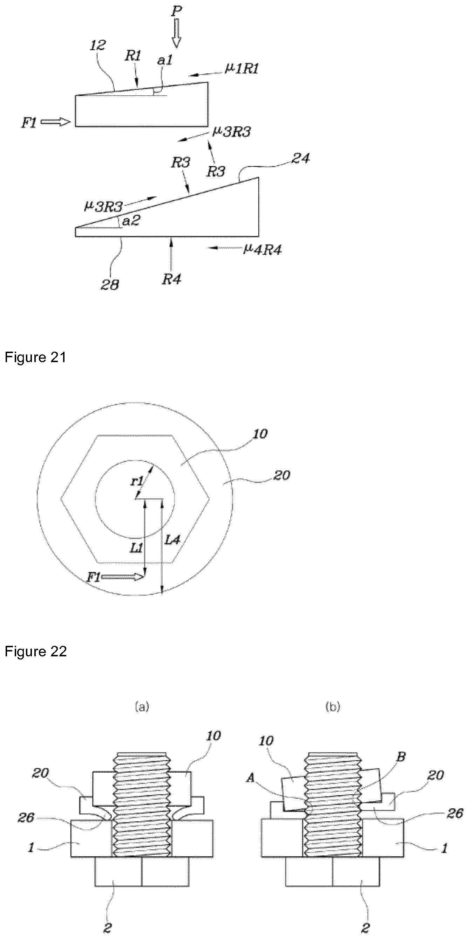

This embodiment, however, has a different technical feature wherein the upper surface of the loosening prevention washer 20 allows the nut 10 to be mounted thereon, and in addition thereto, an insertion fixing piece 26 may be formed thereof, which fits into the screw thread of the bolt. In this insertion fixing piece 26, a part of the upper surface of the washer body part 21 is split into a plurality of parts in the radial direction of the bolt insertion hole 23, and it is formed sloped downward or upward toward the central shaft of the bolt insertion hole 23. The aforementioned insertion fixing piece 26 is pressed in the screw axis direction as the nut 10 is tightened, and it is deformed in the horizontal direction and is strongly fitted into the protruded portions of the screw thread of the bolt body. The insertion fixing piece 26 will be described later with reference to Figures 22 to 24.

Figure 2C is a view illustrating a loosening prevention washer 20 according to further another embodiment of the present invention. Since the loosening prevention washer 20 is formed of a washer body part 21, an engaging shoulder 25, a sloped surface 24 and an insertion fixing piece 26, it is same as Figure 2B. So, the detailed description thereof will be omitted.

The aforementioned loosening prevention washer 20, however, may differ in the way that a flange part 27 is formed extending from the circumference of the washer body part 21. If the loosening prevention washer 20 is compressed against the parent material, this flange part 27 may allow to increase the friction resistance moment (since "friction resistance moment = force x arm length", the friction resistance moment is in proportion to the length from the moment center to the contact surface with the parent material, thus more surely inhibiting the occurrence of the sliding between the loosening prevention washer 20 and the parent material.

If an external force or vibration are applied to the portion where the nut has engaged, the sliding first occurs at the sloped contact surface between the nut 10 and the loosening prevention washer 20 rather than at the horizontal contact surface between the parent material and the loosening prevention washer 20, by which the loosening prevention washer 20 can provide a more reliable loosening prevention function.

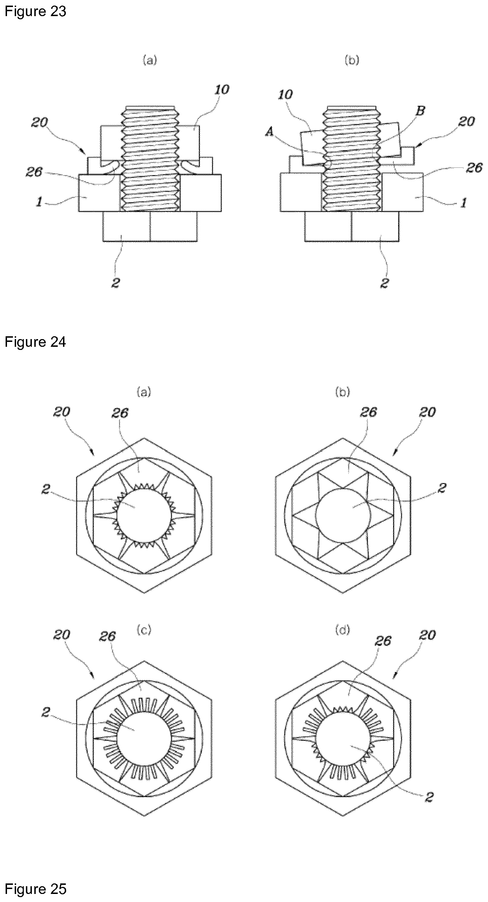

Comparing the loosening prevention washer 20 in Figure 2C to the washer in Figure 2B, another difference is that the shape of the end of the insertion fixing piece 26 is changed from a pointed shape to a rounded shape at its both sides. The shape of the end of the insertion fixing piece 26 may be formed in various shapes, for example, a rounded shape, a pointed shape, a tooth shape, etc. Various examples of the shape of the end of the insertion fixing piece 26 will be described later with reference to Figure 24.

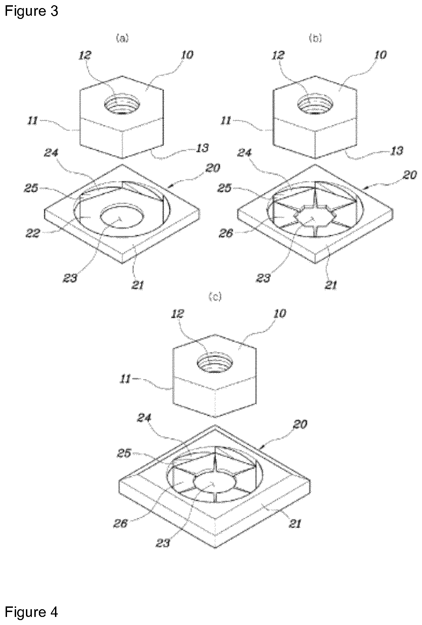

In Figures 3A to 3C, the technical configurations are same as Figures 2A to 2C except that the exterior of the loosening prevention washer 20 is quadrangular, for which the description thereof will be omitted. If the exterior of the loosening prevention washer 20 is quadrangular, when it needs to loosen the washer, it can be loosened using a wrench as each side of the washer is held by the wrench, and the washer is rotated. For the same purpose, the exterior of the loosening prevention washer 20 may be formed polygonal, for example, a hexagonal shape. Alternatively, protrusions may be formed radial on the outer surface of the washer the exterior of which is circular.

Figures 4A to 4C show the same technical configuration as Figures 3A to 3C except that the loosening prevention washer 20 is engaged with a bolt, not a nut, so the description thereof will be omitted. In a power engine, for example, a vehicle engine, etc., a female screw is used at the frame, and the screw thread 18 of the bolt is inserted in the female screw thread and is tightened and engaged without using the nut.

The loosening prevention washer 20 according to the present invention may directly contact with the bolt head 15 without using a nut and may be compressed when in use. The corner part 17 of the bottom surface of the bolt head 15 may be engaged with the loosening prevention washer 20 in the same way as the corner part 13 of the bottom surface of the nut 10 described in Figures 2 and 3.

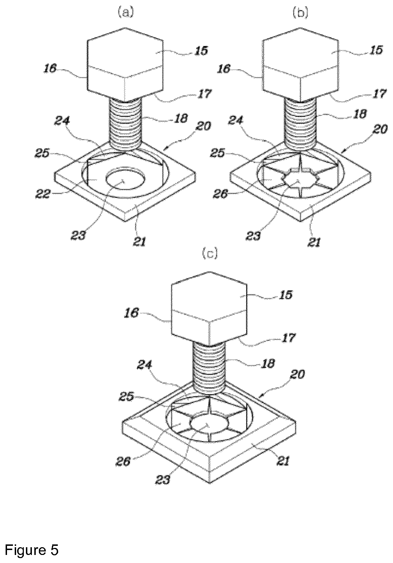

Although it will be described later by way of the embodiment wherein the nut 10 is used with reference to Figures 5 to 27, it is obvious that the configuration wherein the bolt head instead of the nut is directly engaged to the loosening prevention washer 20 belongs to the technical concept of the present invention.

Figures 5 to 8 are views illustrating a configuration of the loosening prevention washer 20 according to various embodiments of the present invention. As illustrated in Figure 5A, the engaging shoulder 25 and the sloped surface 24 may be provided multiple in number in the circumferential direction of the circle which can be drawn with a predetermined radius (r) about the center of the bolt insertion hole 23. In this case, the engaging shoulder 25 and the sloped surface 24 may be formed at a little outer portion as compared to the corner part 13 of the bottom surface of the nut 10, by which the nut can be accurately mounted on the upper surface of the loosening prevention washer 20.

The engaging shoulder 25 may be formed to match one-to-one with the corner part 11 of each outer side surface of the nut 10, by which the nut can be more accurately mounted on the upper surface 22 of the loosening prevention washer 20.

Since the engaging shoulder 25 is formed integral using a height difference (h) from the upper surface 22 to the top of the sloped surface 24, the manufacturing may become easier than forming them separately, and it is possible to readily adjust the height (h) of the engaging shoulder in such a way to adjust the starting position of the sloped surface 24 and the sloped angle of the washer.

The height (h) is determined high enough to allow the corner part 11 of the outer side surface of the nut 10 to be caught by the engaging shoulder 25 when the nut is rotated in the tightening direction, so the loosening prevention washer 20 can rotate together with the nut. The height (h) of the engaging shoulder may change depending on the starting position of the sloped surface 24 of the washer and the size of the sloped angle ($\theta3$) of the washer.

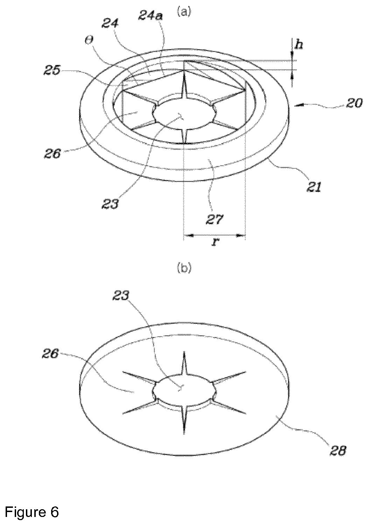

The starting position of the inner corner of the sloped surface 24 of the washer may position on the line 24a corresponding to the corner part 13 of each bottom surface of the nut 10. Figure 5A shows an example wherein the starting position of the inner corner of the sloped surface 24 of the washer position in the center of the line 24a corresponding to the corner part 13 of each bottom surface of the nut. Figure 6A shows an example wherein the starting position of the inner corner of the sloped surface 24 of the washer positions at a starting and an ending position (corresponding to both vertexes of the corner part of one bottom surface) of the line 24a corresponding to the corner part 13 of each bottom surface of the nut. The present invention is not limited thereto. The starting position of the inner corner of the sloped surface 24 may position anywhere on the line 24a corresponding to the corner part 13 of the bottom surface of the nut.

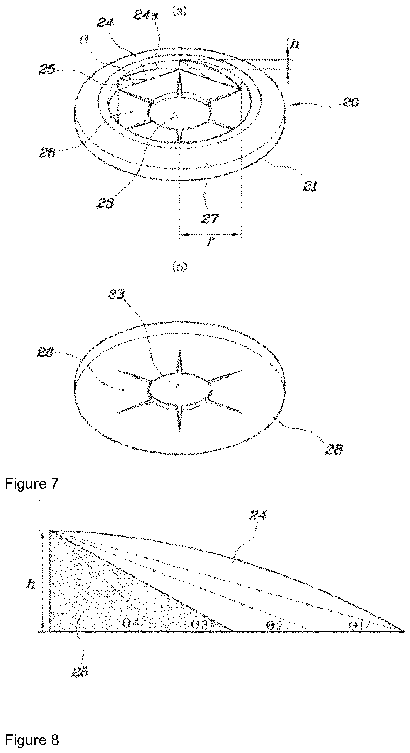

As illustrated in Figure 7, if the starting position of the inner corner of the sloped surface 24 of the washer is closer to the engaging shoulder 25, the sloped angle of the washer necessary to form the height (h) of the same engaging shoulder may gradually increase ($\theta4>\theta3>\theta2>\theta1$).

Meanwhile, as illustrated in Figures 5A and 5B, the bottom surface 28 of the loosening prevention washer 20 may allow expanding the flange part 27, so the diameter thereof can be freely adjusted. The bottom surface 28 corresponds to the pane which contacts horizontal with the parent material in a state where the loosening prevention washer 20 is tightened to the maximum. If the diameter of the washer increases, the area where the bottom surface 28 of the washer contacts with the parent material increases, so the friction resistance moment on the horizontal surface where the washer contacts with the parent material increases.

According to another embodiment of the present invention, as illustrated in Figure 6B, a protrusion part 29 may be formed at the bottom surface 28 of the loosening prevention washer 20, wherein the bottom protrusion part 29 formed protruding downward along the edge thereof. In the bottom protrusion part 29, since the length from the center of the washer to the parent material 1 can be increased, the friction resistance moment of the horizontal contact surface can increase in proportion thereto.

Consequently, the sliding can first occur at the sloped surface rather than the horizontal surface, thus resolving the problem wherein the wedging effects of the Nord-lock washer are not obtained in the conventional technology. The detailed descriptions thereof will be described later with reference to Figures 17 to 21.

Figure 8 is a view illustrating a loosening prevention washer according to further another embodiment of the present invention. Comparing with the embodiments described with reference to Figures 2 and 3, it is possible to advantageously and easily manufacture it using one sheet of the plate material without separately processing the upper surface 22 to mount the nut on the washer body part 21.

More briefly, Figure 8A shows a flat plate material. The portion spaced apart by a predetermined radius from the center of the bolt insertion hole 23 in the washer body part 21 is cut into a predetermined shape along a polygonal line (for example, a hexagonal or quadrangular shape) of the nut, and the cut portion is bent upward, thus forming a sloped bent piece 30. Consequently, the sloped surface 24 allowing the corner part 13 of the bottom surface of the nut to travel up with the aid of the sloped bent piece 30 may become integral with the engaging shoulder 25 where the corner part 11 of the outer side surface of the nut is caught. An upper surface 22 on which the polygonal nut bottom surface is mounted, can be naturally formed at the body part 21 of the loosening prevention washer 20 by means of the sloped bent piece 30.

In this case, it is preferred that the loosening prevention function is carried out while keeping the sloped surface 24 at a predetermined angle in a state where the end of the sloped bent piece 30 is caught by the upper surface 22 of the body part and is not fully unfolded even when the sloped bent piece 30 receives a strong force to be unfolded in the horizontal direction, which can be carried out in such a way that the upper surface 22 of the body part being opposite to the end of the sloped bent piece 30 is a little extended in the direction of the sloped bent piece 30 through a compressing procedure.

In case of Figure 8B, a sloped protrusion piece 31 may be formed along the polygonal corner line of the nut at the portion which is spaced apart by a predetermined radius from the center of the bolt insertion hole 23 on the upper surface 22 of the washer body part 21 formed in the flat plate shape. The sloped surface 24 allowing the corner part 13 of the bottom surface of the nut to travel up with the aid of the sloped protrusion piece 31 may be formed integral with the engaging shoulder 25 where the corner part 11 of the outer side surface of the nut is caught. According to the present embodiment, different from the sloped bent piece in Figure 8A, it is advantageous that the sloped protrusion piece 31 is not pressed or bent. At the body part 21 of the loosening prevention washer 20, an upper surface 22 on which a polygonal nut bottom surface is mounted, can be naturally formed by means of the sloped protrusion piece 31.

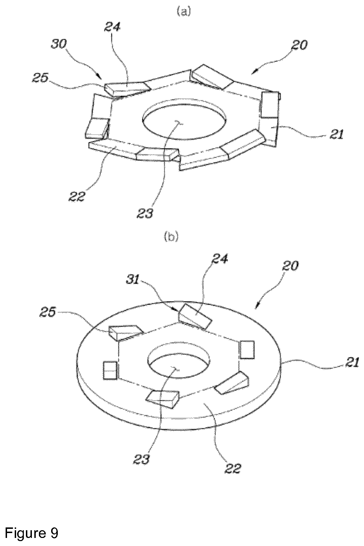

Figure 9 is a view illustrating a loosening prevention washer according to further another embodiment of the present invention. In the loosening prevention washer 20 in Figure 8B, the engaging shoulder 25 and the sloped surface 24 are simultaneously formed by one sloped protrusion piece 31. In other words, the upper surface of the sloped protrusion piece 31 may become a sloped surface 24, and the inner side surface thereof may become an engaging shoulder 25. Consequently, since the size of the sloped angle (θ) is in proportion to the height (h) of the engaging shoulder 25, it is impossible to control both independently.

According to the modified embodiment of the present invention, as illustrated in Figure 9B, the sloped protrusion piece 32 forming the sloped surface 24 and an engaging block part 33 forming the engaging shoulder 25, however, may be formed separately. As a result, as illustrated in Figure 9A, the height (h) of the engaging shoulder can be increased irrespective of the size of the washer sloped angle (θ). In this way, if the height (H) of the engaging shoulder is increased, the corner part of the outer side surface of the nut can be more easily caught by the engaging shoulder when tightening the nut, so it can be rotated easily with a larger tightening torque, and when the nut is loosened, the washer sloped angle (θ) can be minimized, by which the friction resistance force of the washer bottom surface can be increased.

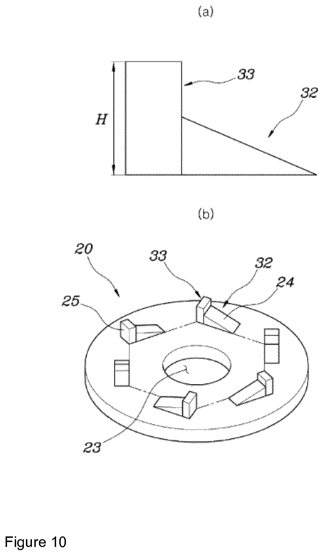

Figure 10A is a view illustrating a state where the nut is rotated in the tightening direction (A). The corner part of the outer side surface of the nut is caught by the engaging shoulder 25 of the loosening prevention washer 20, and the nut and the loosening prevention washer can rotate together. Since the nut and the washer are not compressed against the parent material at the initial rotation state, there is not any friction force, for which even when it is caught a little, it can be easily rotated. As the nut is more tightened, the corner part of the outer side surface is caught deeper by the engaging shoulder, so it can withstand a larger tightening force.

Figure 10B is a view illustrating a state where the nut is rotated in the loosening direction (B). If the nut is rotated in the loosening direction, since the contact between the nut and the engaging shoulder of the washer is removed, the washer cannot be rotated. The nut can be rotated in such a way that the corner part of each hexagonal bottom surface of the nut indicated by the dotted line in the drawing is superposed with the sloped surface 24 of the loosening prevention washer 20. As a result, the corner part 13 of each hexagonal bottom surface of the nut may travel up along the sloped surface 24, thus moving forwardly the nut in the direction of the bolt screw axis.

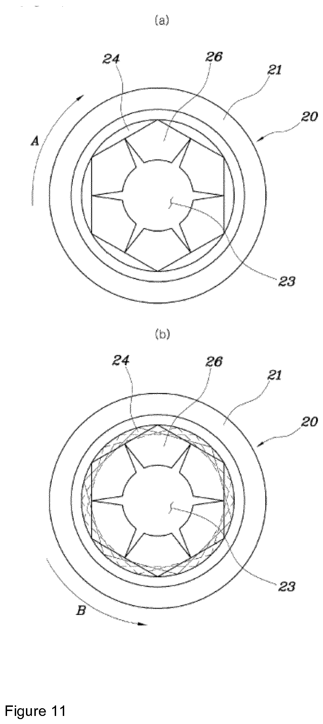

Figure 11A is a view illustrating the loosening prevention washer 20 for a quadrangular nut. Figure 11B is a view illustrating a state where the quadrangular nut is superposed with the sloped surface 24 of the loosening prevention washer 20 when the quadrangular nut is rotated in the loosening direction. Since the operation is same as Figures 10A and 10B showing the examples of the hexagonal nut except that this embodiment is related with the quadrangular nut, the detailed description thereof will be referred thereto.

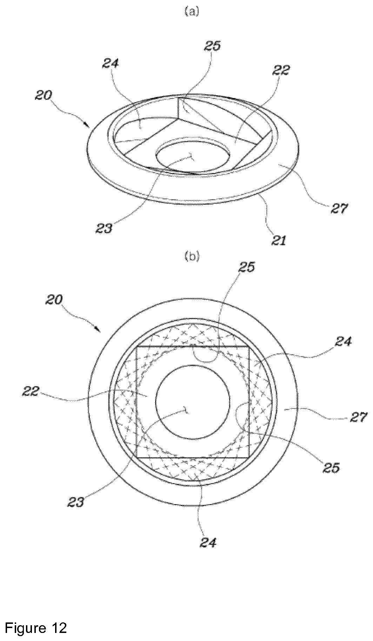

Figures 12 to 15 are views illustrating the modified examples from the basic configurations of the engaging shoulder 25 and the sloped surface 24 of the loosening prevention washer 20 according to the present invention which has been described with reference to Figures 5 and 6.

Figure 12 is a view illustrating a modified example from the basic configuration wherein the sloped surface 24 of the loosening prevention washer 20 in Figure 5 is formed only out of the line 24a corresponding to the corner part 13 of each bottom surface of the nut 10. A bottom sloped surface 24b is further added, which extends inside the line 24a corresponding to the corner part 13 of each bottom surface of the nut. In order to avoid any confusion with the bottom sloped surface 24b in terms of a term definition, the conventional sloped surface formed out of the line 24a corresponding to the corner part 13 of each bottom surface of the nut 10 will be called the sloped surface 24 of the side surface.

If the nut 10 is rotated on the tightening direction, as seen in the region (A), the corner part 11 of the outer side surface of the nut 10 is caught by the engaging shoulder 25 and rotates together. On the contrary, if the nut 10 is rotated in the loosening direction, as seen in the region (B), the corner part 13 of the bottom surface of the nut 10 will directly travel up along the bottom sloped surface 24b.

According to the basic configuration in Figure 5, if the diameter of the circumscribed circle of the bottom surface of the nut 10 is smaller than the diameter of the circumscribed circle of the bottom surface of the washer, the nut 10 will rotate at a predetermined angle in the loosening direction, and then will meet the sloped surface 24. For this reason, the confining force of the nut 10 is decreased before the corner part 13 of the bottom surface of the nut 10 moves up along the sloped surface 24, whereby the friction resistance moment with respect to the loosening is weakened. Consequently, if the nut 10 receives intensive vibrations or strong impact, it may be repeatedly loosened or tightened little by little, which may cause the washer to be consequently loosened.

As in the modified example in Figure 12, if the bottom sloped surface 24b is formed to be extend inside the line 24a corresponding to the corner part 13 of each bottom surface of the nut 10, as seen in the region (B), even when the nut 10 with a little small diameter is used, the nut 10 can rotate in the loosening direction, and at the same time it can travel up along the bottom sloped surface 24b of the washer, the confining force and friction resistance moment in the direction of the screw axis of the nut can be directly increased.

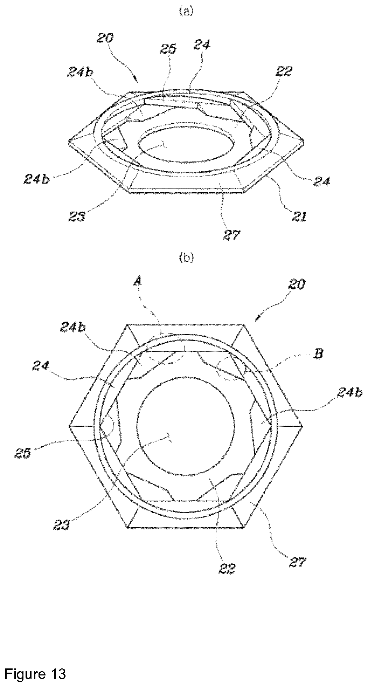

Figure 13 is a view illustrating a modified example from the configuration wherein the sloped surface 24 of the side surface and the bottom sloped surface 24b of the loosening prevention washer 20 are formed out of or inside the line 24a corresponding to the corner part 13 of each bottom surface of the nut 10. A conventional sloped surface 24 formed out of the line 24a corresponding to the corner part 13 of each bottom surface of the nut 10 is removed, leaving only the bottom sloped surface 24b. Consequently, as seen in the region (C), a part of the higher portion of the sloped surface is removed.

If the nut 10 is rotated in the tightening direction, as seen in the region (A), the corner parts 11 of the outer side surface of the nut 10 is caught by the inner wall surface 25a of the washer and rotate together. In this modified example, since the sloped surface 24 of the side surface[F1] has been removed, the inner wall surface 25a of the washer operates like the engaging shoulder 25. On the contrary, if the nut 10 is rotated in the loosening direction, as seen in the region (B), the corner part 13 of the bottom surface of the nut 10 will directly get on the bottom sloped surface 24b.

In this modified example, it is advantageous to manufacture the product in a simpler configuration as compared to Figure 12. Since the diameter of the circumscribed circle of the bottom surface of the nut 10 is closer to the diameter of the inscribed circle than the diameter of the circumscribed circle of the bottom surface 22 of the washer, if the nut 10 is rotates in the loosening direction, the distance and height that the corner part 13 of the bottom surface of the nut 10 moves up along the bottom sloped surface 24b is able to contribute to obtaining an enough confining force and friction resistance moment.

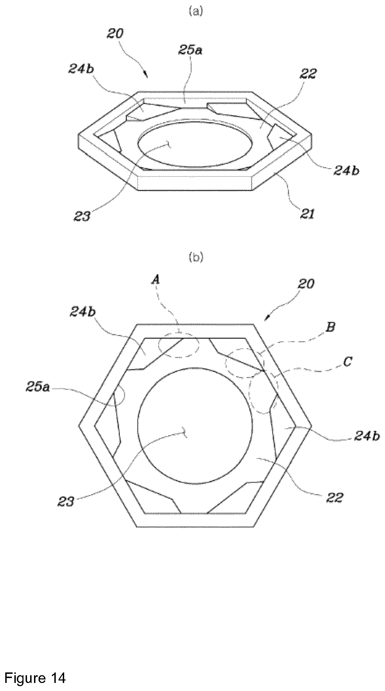

Figure 14 is a view illustrating a configuration similar with the loosening prevention washer 20 which has been described with reference to Figure 9. Separate from the sloped surface 24 of the side surface formed out of the line 24a corresponding to the corner part 13 of each bottom surface of the nut 10, an engaging block part 25b is separately formed at a portion corresponding to the corner part 11 of each outer side surface of the nut 10.

If the nut 10 is rotated in the tightening direction, as seen in the region (A), the corner part 11 of the outer side surface of the nut 10 is caught by the engaging block part 25b and rotates together. On the contrary, if the nut 10 is rotated in the loosening direction, as seen in the region (B), the corner part 13 of the bottom surface of the nut 10 will get on the sloped surface 24 of the side surface.

In this modified example, if the engaging block part 25b is separately formed, the height of the engaging shoulder can be increased irrespective of the size of the sloped angle ($\theta$) of the washer. As a result, if the nut is tightened, the corner part of the outer side surface of the nut can be more easily caught by the engaging shoulder, for which it can be easily rotated even with respect to even a larger tightening torque, and if the nut is loosened, the sloped angle ($\theta$) of the washer can be minimized, thus increasing the friction resistance force.

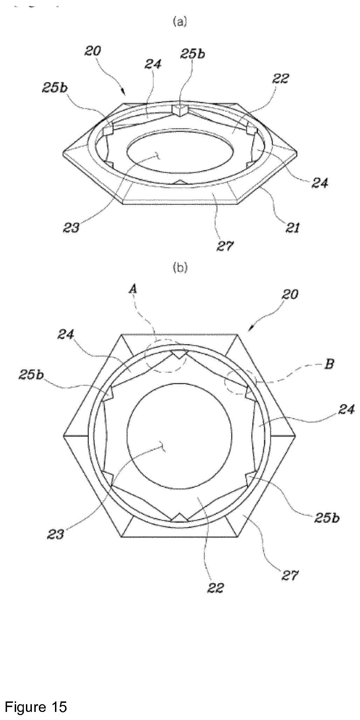

Figure 15 is a view illustrating a modified example from the configuration wherein the sloped surface 24 of the side surface and the sloped surface 24b of the bottom of the loosening prevention washer 20 in Figure 12 are formed out of or inside the line 24a corresponding to the corner part 13 of each bottom surface of the nut 10. The outline formed inside of the sloped surface 24b of the bottom is formed in an arc shape along the linearity of the inscribed circle (IC) contacting with the line 24a corresponding to the corner part 13 of each bottom surface of the nut 10.

As a result, as seen in Figure 15B, the sloped surface 24b of the bottom may be formed only between the line 24a corresponding to the corner part 13 of each bottom surface of the nut 10 and the inscribed circle (IC) contacting therewith. If the sloped surface 24b of the bottom is formed like this, since the arc of the sloped surface 24b of the bottom is formed starting from the center of the sloped surface 24 of the side surface, the length of the corner 13 of the bottom surface of the nut superposed on the sloped surface 24b of the bottom can be maximized. The sloped surface 24b of the bottom and the sloped surface 24 of the side surface can be continuously formed at the same sloped angles without any bending. If the nut is rotated in the tightening direction or the loosening direction, it can smoothly get on the sloped surface of the washer without any interference with the corner of the sloped surface 24b of the bottom which extends up to the inside of the inscribed circle (IC).

As illustrated in Figure 15A, the configuration wherein a set of the sloped surface 24 of the side surface and the sloped surface of the bottom is formed in such a way that the left side thereof is higher, and the right side thereof is lower, is provided for the sake of use for a right-handed thread which is tightened when rotating rightward, and on the contrary, for the sake of use for a left-handed thread tightened when rotating leftward, it is obvious that a set of the sloped surface 24 of the side surface and the sloped surface 24b of the bottom is formed in such a way that the right side is higher, and the left side is lower.

The numbers indicated in Figure 15B are referred to the heights which are increased when the nut starts rotating in the loosening direction. The starting position of the sloped surface 24b of the bottom may be on the line 24a corresponding to the corner part 13 of each bottom surface of the nut 10. In the present invention, the starting position of the sloped surface 24b of the bottom is referred to the central portion of the line 24a corresponding to the corner part 13 of the bottom surface of the nut, and the height at this time is 0.0mm.

If the nut 10 keeps rotating in the loosening direction, it will move up along the sloped surface 24b of the bottom, and the height will be 0.0-1.2mm. If the starting height where the nut 10 moves up along the sloped surface 24b of the bottom, is 0.0mm, this may take place only if the radius from the center of the nut 10 to the corner part 11 of the outer side surface is smaller than or equal to the radius of the inscribed circle (IC) contacting with the line 24a corresponding to the corner part 13 of each bottom surface of the nut 10, and if the size of the nut increases, the starting position on the sloped surface 24b of the bottom where the nut starts moving up along will become higher.

If the nut 10 has moved up to the height of 1.2mm, the sloped surface along which the corner part 13 of the bottom surface of the nut moves up may move from the sloped surface 24b of the bottom to the sloped surface 24 of the side surface. If rotating continues, the nut will move up along the sloped surface 24 of the side surface, and the height will become 1.2~2.4mm. The highest height of the sloped surface of the side surface is 2.4mm.

Figure 15B is a view illustrating an example wherein the starting position of the sloped surface 24b of the bottom is the central position of the line 24a corresponding to the corner part 13 of each bottom surface, but the present invention is not limited thereto. It may start from a predetermined position (for example, a position crossing with the line of the height of 0.6mm) on the arc of the inscribed circle of the nut.

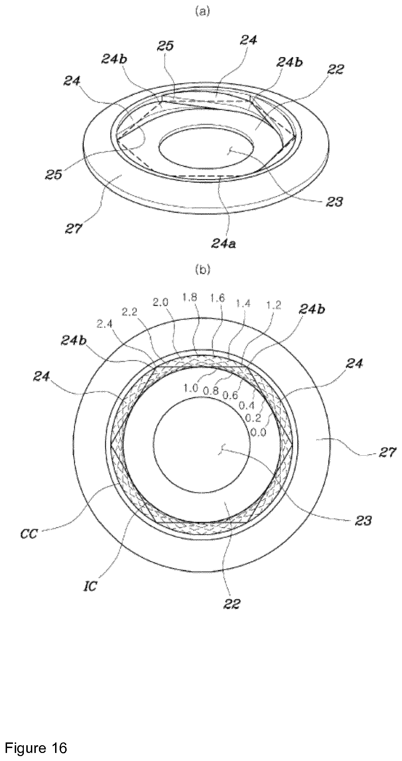

Figure 16 is a view illustrating a modified example from the loosening prevention washer 20 with reference to Figure 15, wherein separate from the sloped surface 24 of the side surface formed out of the line 24a corresponding to the corner part 13 of each bottom surface of the nut 10, an engaging block part 25b may be separately provided at a portion corresponding to the corner part 11 of each outer side surface of the nut 10.

In this way, if the engaging block part 25b is separately formed, the engaging shoulder can be raised irrespective of the size of the sloped angle (θ) of the washer. As a result, when the nut is tightened, the corner part of the outer side surface of the nut can easily contact with the engaging shoulder, so it can easily rotate against a large tightening torque, and if the nut is loosened, the sloped angle (θ) of the washer can be minimized, thus increasing the friction resistance force.

The difference between the conventional Nord-lock washer 4 and the loosening prevention washer 20 according to the present invention will be described in detail. In the Nord-lock washer, if the nut is rotated in the loosening direction, the sliding can first occur at the horizontal contact surface 6 between the nut 3 and the upper washer 4a or the horizontal contact surface 7 between the washer 4b and the parent material, not at the sloped surface 5 formed by the upper washer 4a and the lower washer 4b. On the contrary, in the washer of present invention, the sliding can always occur at the sloped surface between the nut and the washer, not at the horizontal contact surface between the washer and the parent material. These operations will be described in detail on a structural and mechanical basis.

Figure 17 is a view illustrating a stress distribution of the conventional Nord-lock washer, and Figure 18 is a view illustrating a rotation moment distribution of the Nord-lock washer. The reference numbers of Figure 17 is same as the reference numbers which are referred to the components of the Nord-lock washer in Figure 1.

If the nut is tightened to the maximum, a vertical confining pressure (P) is applied. If the side surface operational force (F1) is applied in the rotation direction where the nut is loosened by an external force or vibrations, the force which is applied to each component of the Nord-lock washer may be defined as follows.

A screw thread vertical stress (R1) corresponding to the component force of the vertical confining force may be applied to the engaged portion of the screw thread of the bolt 2 and the nut 3, and a friction resistance force ($\mu$1R1) will be applied along the surface of the screw thread. Here, the screw thread may form a constant sloped angle (a1). An upper horizontal surface vertical stress (R2) corresponding to the component force of the vertical confining force (P) may be applied to the horizontal contact surface 6 with the nut 3 and the upper washer 4a, and the friction resistance force ($\mu$2R2) may be applied along the horizontal contact surface 6.

A sloped surface vertical stress (R3) corresponding to the component force of the vertical confining pressure may be applied to the sloped surface 5 between the upper washer 4a and the lower washer 4b, and the friction resistance force ($\mu$3R3) may be applied along the sloped surface 5. At this time, the sloped surface may form a constant sloped angle (a3). The sloped angle of the sloped surface is formed larger than the sloped angle of the screw thread (a3>a1). The lower horizontal surface vertical stress (R4) corresponding to the component force of the vertical confining pressure (P) may be applied to the horizontal contact surface 7 with the lower washer 4b and the parent material (not illustrated), and the friction resistance force ($\mu$4R4) may be applied along the horizontal contact surface 7.

Referring to Figure 18, if the torque is applied in the direction where the nut 3 is loosened, the arm length of each moment may be defined so as to calculate the rotation moment or the friction resistance moment (M=F x L). First, the radius of the female screw on which the screw thread is formed, is r1. If the torque (F1) is applied, the arm length of the rotation moment of the nut 3 may be L1 which corresponds to the distance from the center of the rotation to the corner part 11 of the outer side surface of the nut 3.

The arm length of the friction resistance moment with respect to the horizontal contact surface 6 with the nut 3 and the upper washer 4a may be L2 which corresponds to the length from the center of the rotation of the nut 3 to the operational point of the friction force. The arm length of the friction resistance moment with respect to the sloped surface 5 between the upper washer 4a and the lower washer 4b may be L3 which corresponds to the length[F2] from[F3] the center of the rotation of the washer 4 to the operational point of the friction force. The arm length of the friction resistance moment with respect to the horizontal contact surface 7 with the lower washer 4b and the parent material may be L4 which corresponds to the length from[F4] the center of the rotation of the lower washer 4b to the operational point of the friction force.

The Table 1 shows the values of each component of the Nord-lock washer provided as a comparison example, the vertical confining pressure (P) by the nut, and the side surface operational force (F1) applied in the direction wherein the nut is loosened.

Table 1

| P(KN) | F1(KN) | $\mu$ | r1(mm) | a1(Figure) | a3(Figure) | L1(mm) |
|---|---|---|---|---|---|---|
| 100 | 100 | 0.25 | 10 | 2.28 | 4.68 | 17.5 |
| $\mu= \mu1 = \mu2 = \mu3 = \mu4$, L2= L3 = L4 | | | | | | |

For the sake of a simplified calculation, it is assumed that the friction coefficients at each surface are same. In terms of the standard of the nut, it is assumed that with respect to the common screw of M20, the radius (r1) of the female screw is 10mm, the perpendicular distance from the center of the rotation of the nut to the corner part 13 of the bottom surface of the polygonal nut is 15mm, and the perpendicular distance (L1) from the center of the rotation of the nut to the corner part 11 of the outer side surface of the nut is 17.5mm. The sloped angle (a1) of the screw thread is a value derived by setting the pitch of the sloped surface of the Nord-lock washer to 2.5mm and the sloped angle (a3) of the sloped surface of the Nord-lock washer is a value derived by setting the number of the sloped surfaces 24 of the washer to 6, and the height of the engaging shoulder 25 of the side surface of each sloped surface to 1.5mm. If it is assumed that the radius of the bottom surface of the nut is 17.5mm (L1) and is cylindrical, the arm length (L2) from the center of the rotation of the nut to the point where the summed force of the friction force applied to the bottom surface may be 14.1mm as a result of the calculation. In the Nord-lock washer having such a standard condition, if it is assumed that the vertical confining pressure (P) is 100KN, and the side surface operational force (F1) applied in the rotation direction wherein the nut is loosened is 100KN, it may be possible to calculate on a mechanical basis that the sliding may occur first at which portion in such a way to calculate the size of the minimum support force which is necessary for the sake of a sliding inhibition at each contact surface.

It is assumed that in terms of the size of the Nord-lock washer, the radius of the washer is same as the radius of the circle contacting with the corner part 11 of the outer side surface of the nut. The L2, L3 and L4, therefore, may have the same values of 14.1 mm, and the L1 has a value of 17.5mm. The radius of the washer may be made larger than the radius of the nut. In this case, the contact area between the upper washer 4a and the lower washer 4b, and the lower washer 4b and the parent material, however, may increase, which may cause the friction resistance moment to increase, for which the sliding may occur with a high possibility at the horizontal contact surface 6 between the nut 3 and the upper washer 4a. Such a result is not preferred due to the structural features of the Nord-lock washer wherein it is premised that the sliding first occurs at the sloped surface 5 rather than the sliding at the horizontal surfaces 6 and 7. As illustrated in Figure 1, the Nord-lock washer is manufactured in such a way that the size of the washer is almost same as the size of the nut. Given this feature, it can be assumed that the L2, L3 and L4 all have the same values in this comparison example.

Given the mechanical relationship of the force at the time the sliding occurs at the horizontal contact surface 6 between the nut 3 and the upper washer 4a, the sloped surface 5 between the upper washer 4a and the lower washer 4b, and the horizontal contact surface 7 between the lower washer 4b and the parent material, which are referred to the three points where the sliding can occur in the Nord-lock washer, the following feature can be obtained.

First, the vertical confining pressure (R2) applied to the horizontal contact surface 6 between the nut 3 and the upper washer 4a has the same force direction as the vertical confining pressure (P), so the values thereof are same. If the force (F1) is applied in the rotation direction where the nut 3 is loosened, at the horizontal contact surface 6, it can be assumed that the minimum repulsive force allowing the nut 3 not to slide, is F2. At the point (where the sliding occurs) where the maximum stop friction force occurs at the horizontal contact surface 6, the rotation moment (M) based on F1-F2 and the friction resistance moment (M') based on the friction force of the horizontal contact surface 6 may be balanced. The V=value (F2) can be obtained from the formula where these two moments are same. On the contrary, if the side surface operational force (F1) is 100KN, the size of the vertical confining force (P2) necessary to prevent the sliding at the horizontal contact surface 6 can be derived.

The vertical confining pressure (R3) applied to the sloped contact surface 5 between the upper washer 4a and the lower washer 4b can be derived using the whole vertical confining pressure (P) and the sloped angle (a3) of the sloped surface. If the force (F1) is applied in the rotation direction wherein the nut 3 is loosened, at the sloped surface 5, it is assumed that the minimum repulsive force necessary to prevent the sliding between a pair of the washers 4a and 4b is F3. The sliding at the sloped surface 5 means that the rotation moment (M3) due to (F1-F3) is larger than the friction resistance moment (M3') due to the friction force of the sloped surface 5. The value (F3) of the minimum repulsive force can be derived from the formula where the two moments are same. Moreover, it is possible to derive the minimum vertical confining pressure (P3) which is necessary for the sake of F3=0.

The repulsive force (F4) preventing the sliding at the horizontal contact surface 7 between the lower washer 4a and the parent material is same as F2, and the minimum vertical confining pressure (P4) necessary for the sake of F4=0, is same as P2.

It may be calculated by the following formula.

$$R1 = P/\{\cos(a1)+\mu1*\sin(a1)\},$$

$$R2 = R4 = P,$$

$$R3 = P/\{\cos(a3)-\mu3*\sin(a3)\},$$

$$F2 = F4 = F1+(P/1.75)*[\{\sin(a1)-\mu1*\cos(a1)\}/\{\cos(a1)+\mu1*\sin(a1)\}-1.41*\mu2], \text{ and}$$

$$F3 = F1+(P/1.75)*[\{(\sin(a1)-\mu1*\cos(a1)\}/\{\cos(a1)+\mu1*\sin(a1)\}-1.41*\{\sin(a3)+\mu3*\cos(a3)\}/\{(\cos(a3)-\mu3*\sin(a3)\}]$$

Each stress value may be summarized as follow.

Table 2

| (Unit KN) | | | | | |
|---|---|---|---|---|---|
| Horizontal surface between nut and upper washer | | Sloped surface between upper washer and lower washer | | Horizontal surface between lower washer and parent material | |
| R2 | F2 | R3 | F3 | R4 | F4 |
| 100 | 68.0 | 102.4 | 60.8 | 100 | 68.0 |

As seen in the above table 2, the repulsive force (F2, F4) necessary to prevent the sliding at two horizontal surfaces of the Nord-lock washer is 68KN larger than 60.8KN which is referred to the repulsive force (F3) necessary to prevent the sliding at the sloped surface of the washer. If the vertical confining force of P=100KN is applied, the sliding may occur at two horizontal surfaces even if over 32.0KN (100-68.0=32.0) of the side surface operational force (F1) causing the nut loosening in the horizontal direction is applied, but the sliding does not occur unless over 39.2KN (100-60.8=39.2) of the side surface operational force (F1) is applied on the sloped surface, for which the sliding may first occur at the two horizontal contact surfaces 6 and 7 rather than at the sloped contact surface 5, and then the nut is loosened. Calculating in the reverse way, if the side surface operational force of F1 = 100KN is applied, the minimum vertical confining pressure (P2, P4) necessary to prevent the sliding at the horizontal contact surfaces 6 and 7 is 312.3KN larger than 255.2KN which is the minimum vertical confining pressure (P3) necessary to prevent the sliding at the sloped contact surface 5. This means that if 300KN is applied as the vertical confining pressure (P), the sliding can be completely prevented at the sloped surface, but the sliding may occur at two horizontal surfaces.

Since the sliding can first occur at the horizontal surface rather than at the sloped surface of the Nord-lock washer, it has been proved on the structural and mechanical basis that the loosening prevention function of the Nord-lock washer does not work, wherein it is basically premised that the sliding occurs at the sloped surface in the Nord-lock washer.

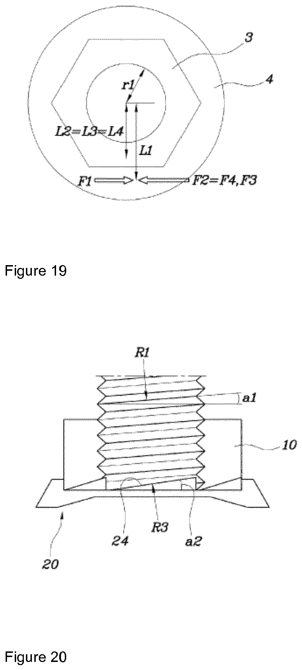

The configuration wherein the sliding can always first occur at the sloped surface of the washer in case of the loosening prevention washer 20 according to the present invention, will be described on a mechanical calculation basis with reference to Figures 19 to 21.

The distribution of external force applied when the loosening prevention washer 20 slides, will be described with reference to Figures 19 and 20.

First, it is assumed that since the nut 10 is loosely tightened, the vertical confining pressure where the screw thread of the bolt presses the screw thread of the nut does not occur (P=0).

In this state, if the side surface operational force (F1) is applied in the rotation direction where the nut is loosened, since there is not any friction force at the sloped surface of the washer at the initial state, the sliding occurs between the bottom surface of the nut and the sloped surface of the washer. As the sliding goes on along the sloped surface of the washer, the vertical stress (R3) and the friction resistance force ($\mu$3R3) occurs at the sloped surface. The vertical stress (R3) and the friction resistance force ($\mu$3R3) at the sloped surface may cause the vertical stress (R4) and the friction resistance moment at the bottom surface of the washer together with the torque in the horizontal direction. If the rotation moment applied between the bottom surface of the washer and the parent material is larger than the friction resistance moment, the sliding may occur at the horizontal contact surface between the bottom surface of the washer and the parent material, and if it is smaller than the friction resistance moment, the sliding may occur at the sloped surface of the washer, not at the bottom surface.

Even though the vertical direction confining pressure (P) of a constant size is applied from the beginning, the same result may be obtained as the occasion wherein F1 is applied in a state where P = 0 after the vertical stress (R4) at the bottom surface is over the value (P) due to the side surface operational force (F1 Since the value (P) can be freely changed by adjusting the tightening strength of the nut, whether or not the sliding occurs at which surface between the sloped surface 24 of the washer, the sloped contact surface contacting with the bottom surface of the nut, the bottom surface 28 of the washer, and the horizontal contact surface contacting with the parent material is not related with the size of the initial vertical confining pressure (P) of the nut.

The aforementioned configuration will be more specifically defined as follows.

The side surface operational force (F1) is applied in the rotation direction where the nut is loosened to the corner part 11 of the outer side surface of the nut which has been loosely tightened. For this reason, the screw thread vertical stress (R1) may occur at the engaged portion of the screw threads of the bolt and the nut, and the friction resistance force ($\mu$1R1) may occur along the surfaces of the screw thread. At this time, the screw thread may have a constant sloped angle (a1).

The sloped surface vertical stress (R3) may occur between the sloped surfaces of the nut 10 and the washer. Here, the sloped surface may has a constant sloped angle (a2). The horizontal surface vertical stress (R4) may occur at the horizontal contact surface between the bottom surface 28 of the washer and the parent material, and the friction resistance force ($\mu$4R4) may be generated along the horizontal contact surface.

Referring to Figure 21, if the side surface operational force (F1) is applied in the rotation direction where the nut 10 is loosened, the arm length of each moment to calculate the rotational moment or the friction resistance moment (M=FxL) may be defined. First, the radius of the female screw of the nut wherein the screw thread has been formed is r1.

If the side surface operational force (F1) is applied, the possible maximum arm length of the rotation moment of the nut 10 may be same as L1 which corresponds to the perpendicular distance from the center of the rotation to the corner part 11 of the outer side surface of the nut 10. L3 which is defined as the arm length of the friction resistance moment occurring between the nut 10 and the sloped surface 24 of the washer is a little smaller than, but is almost equal to L1 which is the perpendicular distance between the center of the rotation to the corner part 11 of the outer side surface of the nut 10.

The arm length of the moment of the horizontal contact surface between the bottom surface 28 of the washer and the parent material is almost same as the distance from the center of the rotation to the outer most edge of the bottom surface 28 of the washer or the radius of the bottom surface 28 of the washer in case where the downwardly protruding bottom protrusion part 29 is formed at the outer most edge of the bottom surface 28 of the washer.

The following table 3 shows the side surface operational force (F1) applied to the washer of the present invention and the values of each component of the washer.

Table 3

| F1(KN) | $\mu$ | r1(mm) | a1(Figure) | a2(Figure) | L3(mm) | L4(mm) |
|---|---|---|---|---|---|---|
| 100 | 0.25 | 10 | 2.28 | 4.68 | 17.5 | K*r1 |
| $\mu$= $\mu$1 = $\mu$2 = $\mu$3 = $\mu$4, K = the expansion coefficient of the washer radius. | | | | | | |

For the sake of a simplified calculation, it is assumed that all the friction coefficients at each surface are all same.

In terms of the nut size standard, it is assumed that with respect to the common screw of M20, the radius (r1) of the female screw is 10mm, the perpendicular distance from the center of the rotation of the nut to the corner part 13 of the bottom surface of the polygonal nut is 15mm, and the perpendicular distance (L1) from the center of the rotation of the nut to the corner part 11 of the outer side surface of the nut is 17.5mm. The sloped angle (a1) of the screw thread is a value derived by setting the pitch of the screw thread to 2.5mm, and the sloped angle (a2) of the sloped surface of the washer is a value derived by assuming that the number of the sloped surfaces 24 of the washer is 6, and the height of the engaging shoulder 25 defined using the side surface of each sloped surface is 1.5mm.

The length L4 defined as the minimum radius of the bottom surface 28 of the washer 20 may be freely increased in such a way that the width of the flange part 27 of the washer 20 is expanded as in Figures 5B or the bottom protrusion part 29 is formed at the edge of the bottom surface 28 of the washer as in Figure 6B, and only an outer portion of the bottom surface of the washer is contacted with the parent material. This can be compared to the conventional Nord-lock washer and may be a technical feature of the present invention. In case of the Nord-lock washer, if the radius of the washer is increased, the friction resistance moment may increase at the sloped surface of the washer or the horizontal contact surface between the lower washer and the parent material. As a result, since the sliding occurs at the horizontal contact surface between the nut and the upper washer, the radius of the washer cannot be freely increased in the conventional technology.

According to another embodiment of the present invention, in addition to the method for increasing the friction resistance moment by expanding the flange part 27 of the washer 20, it may be possible to increase the friction resistance moment by changing the material of the bottom surface 28 of the washer 20 with a material having a high friction coefficient or it may be possible to decrease the friction resistance moment in such a way to change the material of the sloped surface 24 of the washer 20 with a material having a low friction coefficient.

The value L4 representing the minimum arm length of the friction resistance moment between the washer and the parent material may be defined in the form of L4 = K*r1 using a washer radius expansion coefficient (K) which represents how much the radius has increased from the radius (r1) of the screw thread. It is assumed that the value (K) may be derived in such a way that if the side surface operational force (F1), for example, vibrations, etc. causing the rotation in the loosening direction to the nut, the sliding first occurs between the bottom surface of the nut and the sloped surface of the washer, and then has stopped, and the size of the rotation moment in the loosening direction of the nut caused at the bottom surface 28 of the washer by means of the side surface operational force (F1) is same as the size of the friction resistance moment of the bottom surface 28.

Actually, if the radius of the bottom surface of the washer is larger than L4 (K*r1), the sliding may always first occur at the bottom surface of the nut and the sloped surface 24 of the washer rather than between the bottom surface 28 of the washer and the horizontal surface of the parent material. If the angle (the height of the sloped surface) of the sloped surface of the washer is determined, the minimum radius (L4 = K*r1) of the washer which makes sure the sliding at the sloped surface, may be determined, and the loosening of the nut can be completely prevented in such a way that the radius (the arm length of the friction resistance moment) of the bottom surface of the washer is determined larger than the minimum radius.

In the loosening prevention washer 20 defined as in Table 3, when the washer radius expansion coefficient (K) is actually calculated, if the height of the sloped surface of the washer is 1.5mm, the sloped angle of the sloped surface will be 4.68°, and the washer radius expansion coefficient (K) will be 2.37. Since the radius (r1) of the screw thread is 10mm, the minimum radius of the bottom surface of the washer will be L4 = 23.7mm. Therefore, if the radius of the bottom surface of the washer is larger than 23.7mm, the sliding may always first occur at the sloped surface of the washer rather than at the bottom surface of the washer.

The aforementioned value (K) may be calculated by the following formula. $M1 = [1.75*r1] * [R3*\{sin(a2)+\mu3cos(a2)\}]$, and the friction resistance moment at the bottom surface of the washer by F1 may be $M2 = (K*r1)*\mu4*R4$. Since $R4 = R3*\{cos(a2)-\mu3sin(a2)\}$, the parallel state (M1 = M2) of the rotation causing moment and the friction resistance moment may be assumed, from which it is possible to drive $K = (1.75/\mu4)*[\{sin(a2)+\mu3*cos(a2)\}/\{cos(a2)-\mu3*sin(a2)\}]$.

Here, the washer radius expansion coefficient (K) is not related with the horizontal operational force (F1) and the vertical confining pressure (P), and it may be greatly affected by the sloped angle (a1) of the screw thread of the nut and the sloped angle (a2) of the sloped surface of the washer.

If the radius of the washer is 23.7mm and 25.0mm, the rotation moment at the washer and the friction resistance moment at the bottom surface of the washer due to the side surface operational force F1 = 100KN may be calculated as follows.

Table 4

| Radius (mm) at bottom surface of washer | Rotation moment of nut(N·m) | Resistance moment (N·m) of screw thread | Rotation moment (N·m) of washer | Resistance moment (N·m) at bottom surface of washer |
|---|---|---|---|---|
| L4=23.7 | 1,750 | 455 | 1,295 | 1,295 |
| L4=25.0 | 1,750 | 455 | 1,295 | 1,365 |

As seen in Table 4, the friction resistance moment 455 of the screw thread of the nut and the rotation moment of the washer caused by the rotation moment (F1*L1 = 1,750) of the nut are constant irrespective of the minimum radius (L4) of the bottom surface of the washer. Meanwhile, if the radius of the bottom surface of the washer is actually equal to or smaller than K*r1 (L4 = 23.7mm), the friction resistance moment applied to the bottom surface of the washer is equal to or smaller than the rotation moment of the washer, the sliding may occur at the bottom surface of the washer, and if the radius at the bottom surface is larger than K*r1, the friction resistance moment (1,365) applied to the bottom surface of the washer is larger than the rotation moment (1,295) of the washer, the sliding does not occur at the bottom surface of the washer, thus permanently preventing the loosing.

Table 5 and Table 6 show the stress distribution and the washer radius expansion coefficient (K) based on the height (h) of the sloped surface 24 of the loosening prevention washer 20 according to the present invention. The values are calculated under the parallel state of the force wherein the sliding may occur enough at the sloped surface 24 by F1, and then stops, and the sliding does not occur at the horizontal surface between the washer and the parent material. The values of each component of the remaining nuts and washers are same as the values in Table 3.

Table 5

| Height (h) (mm) of sloped surface | Sloped angle (degrees) | R1(KN) | R3(KN) | R4(KN) | Min washer radius(L4)(mm) | Washer radius expansion coefficient(K) |
|---|---|---|---|---|---|---|
| 0.5 | 1.56 | 249 | 253 | 251 | 19.55 | 1.95 |
| 1 | 3.13 | 231 | 237 | 234 | 21.62 | 2.16 |
| 1.5 | 4.68 | 216 | 224 | 218 | 23.72 | 2.37 |
| 2 | 6.23 | 203 | 212 | 205 | 25.85 | 2.59 |

Table 6

| Height of sloped surface of washer | | Radius of washer | |
|---|---|---|---|
| Height (h)(mm) of sloped surface | Increase rate | Min washer radius (L4)(mm) | Increase rate |
| 0.5 | - | 19.55 | - |
| 1.0 | 100% | 21.62 | 11% |
| 1.5 | 200% | 23.72 | 21% |
| 2.0 | 300% | 25.85 | 32% |

As the height of the sloped surface of the washer increases, the minimum washer radius (L4) to make sure the sliding at the sloped surface may increases. Since the washer radius increase rate accounts for 1/10 of the height increase rate of the sloped surface of the washer, the increase and decrease of the washer radius based on the change to the sloped surface of the washer is not large. For this reason, it is possible to make sure the sliding at the sloped surface by increasing the friction resistance moment at the horizontal surface in such a way to increase little by little the washer radius (an arm length of the moment, L4), if necessary. Of course, it is obvious that the method for increasing the friction resistance moment at the horizontal surface may be carried out together with various ways to increase, for example, the washer radius and the friction coefficient.

In addition thereto, the Nord-lock washer is able to generate a friction resistance moment under the circumference where the vertical confining pressure (P) of a constant size has been applied, but in the present invention, if the side surface operational force (F1) is applied even though the vertical direction confining pressure (P) is not applied, the compression stress and the friction resistance force may occur directly by the sloped surface 24, for which it is possible to obtain a desired loosening prevention function even in a state where the bolt is loosely loosened. In the loosening prevention washer according to the present invention, the sliding may always first occur at the sloped surface rather than at the horizontal surface irrespective of the size of the impact force (F1) in the horizontal direction which causes the loosening, so the confining pressure (P) may occur in the vertical direction, and the increased confining pressure (P) allows to increase the friction resistance moment at the sloped surface and the horizontal surface and allows for a virtuous circle.

The insertion fixing piece 26 which is another major technical component according to the present invention will be described with reference to Figures 22 to 24.

The insertion fixing piece 26 is formed at the washer body part 21 obliquely in the upward or downward direction toward the central axis of the bolt insertion hole 2 and is tightly fit into the screw thread of the bolt in a state where the bolt or the nut is tightened.

Figure 22 is a view illustrating an embodiment example wherein the insertion fixing piece 26 of the washer is formed oblique downward. As illustrated in Figure 22A, if the nut 10 is rotated in the tightening direction, the bottom of the nut 10 may contact with the upper surface 22 of the washer body part 21 and may keep descending. In this way, the insertion fixing piece 26 of the washer may be pressurized in the direction of the screw axis and may gradually become flat, and may be finally inserted between the screw threads of the body of the bolt 2 and may be fit engaged. As a result, the insertion fixing piece 26 is able to strongly bite the body of the bolt 2, thus preventing the movements of the washer due to an external force, for example, impact and vibrations, and in addition to the friction resistance between the loosening prevention washer 20 and the parent material 1, the friction resistance force resisting against the relative rotation between the loosening prevention washer 20 and the body of the bolt 2 can be generated, which may assist the sliding taking place first at the sloped surface 24 of the nut and the washer.

The insertion fixing piece 26 may be rotated in the direction where the washer is a little loosened by an external force, for example, impact and vibrations which are applied to the nut and washer. Thus, it is possible to resolve the problem wherein as the nut is repeatedly rotated, the nut is loosened. Since a plurality of the insertion fixing pieces strongly bite the screw thread of the bolt, the washer should move in the direction of the screw axis while rotating along the screw thread of the bolt in order for the washer to first rotate reversely rather than the nut, but since the moving passage is blocked by the bottom surface of the nut, the washer cannot first rotate in the loosening direction rather than the nut.

As seen in Figure 22B, since the screw thread of the bolt 2 is formed in a spiral shape, the heights of the screw threads formed at the left and right sides may differ when viewing them in the axial direction of the bolt 2. For this reason, the heights of the positions (A and B) of the screw threads of the bolt into which the insertion fixing piece 26 of the loosening prevention washer 20 is strongly fit may differ from each other, and a deviation may occur between the nut 10 and the body of the bolt 2, thus increasing the friction resistance force.

Figure 23 is a view illustrating an embodiment example wherein the insertion fixing piece 26 of the washer is formed sloped upward. Since it has the same operations as the embodiment described with reference to Figure 22 except for the inclination direction of the insertion fixing piece 26, the detailed description thereof will be omitted.

Figure 24 is a view illustrating various modifications with respect to the shape of the end of the insertion fixing piece 26 of the washer. As for the tooth shape in Figure 24A, the end of the insertion fixing piece 26 is formed in a tooth shape. Since these teeth bite the upper and lower portions of the screw threads of the bolt 2 in a zigzag pattern, the position fixing force of the washer can be enhanced more. As for the apex type in Figure 24B, the end of the insertion fixing piece 26 is formed in a pointed shape, by which the confining pressure per unit area penetrating under the body of the bolt 2 can be increased. As for the slashed pattern in Figure 24C, the end of the insertion fixing piece 26 is split into multiple parts in the radius direction, thus providing a cushioning function for preventing the end thereof from being broken by vibrations or impact. As for the combined shape in Figure 24D, the tooth shape and slashed shape are repeatedly provided, which is able to provide a combined function of both modifications.

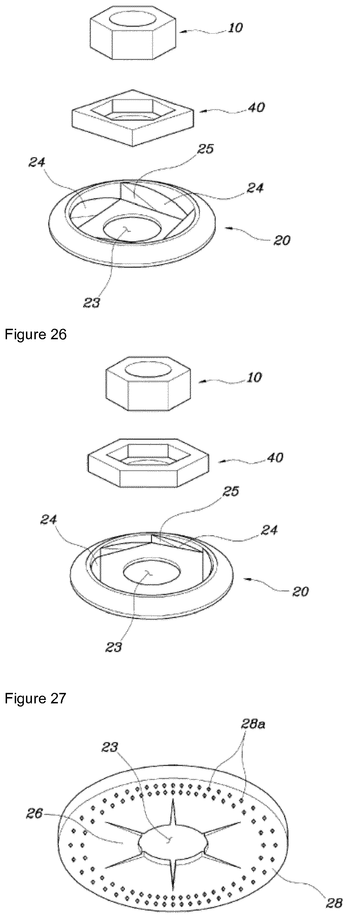

As illustrated in Figures 25 and 26, the loosening prevention washer according to the present invention may include an assistant shoe which may allow increasing the size of a nut or a bolt. Figure 25 shows a quadrangular assistant show 40 which can be inserted into a quadrangular washer, and Figure 26 shows a hexagonal assistant show 40 which can be inserted into a hexagonal washer.

The sizes of the nut or bolt head which are commercially available not, are various based on the standard. It is possible to manufacture the loosening prevention washer having a variety of diameters to satisfy these standards.

As seen in figures 25 and 26 according to another embodiment, the loosening prevention washer 20 according to the present invention is manufactured a little larger than the size of the typical nut 10 or the bolt head, and a method for increasing the size of the nut 10 or the bolt head to the standard of the loosening prevention washer 20 in such a way to use the assistant shoe 40 is available. The loosening prevention washer 20 according to the present invention having a relatively complicated size may be standardized for a few kinds, and the assistant shoe 40 which can be manufactured in a simple structure, may be manufactured in various sizes, thus enhancing the productivity and convenience when in use.

As illustrated in Figure 25, if the assistant shoe 40 is used, the hexagonal nut 10 may be adapted to the quadrangular loosening prevention washer 20. As a result, as compared to when using the hexagonal loosening prevention washer 20, a stable engaging and loosening prevention function can be obtained since the length of the sloped surface can be increased, and the sloped angle can be lowered, and the height of the engaging shoulder can be increased.

Figure 27 is a view illustrating a bottom fixing protrusion 28a according to the present invention. In the bottom fixing protrusion, a plurality of triangular protrusions are arranged downward in a pointed shape at the bottom surface 28 of the loosening prevention washer 20. If the nut is rotated in the tightening direction, since the bottom fixing protrusions 28a dig into the surface of the parent material while scratching the surface thereof, a sloped surface may be formed at the surface of the patent material, thus increasing the friction resistance moment which allows preventing the washer from rotating in the loosening direction. Moreover, if the number of the bottom fixing protrusions 28a are 2-3 to the minimum or the heights of the fixing protrusion 28a are determined different, the confining pressure per unit area to penetrate into the parent material can be maximized, and the friction resistance force can be enhanced through the formation of the deviation between the bolt and the screw axis of the nut.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

| | |
|---|---|
| 1: Parent material | 2: Bolt |
| 10: Nut | 11: Corner part of outer side surface |
| 13: Corner part of bottom surface | |
| 20: Loosening prevention washer | |
| 21: Body part | 22: Upper surface |
| 23: Bolt insertion hole | 24: Sloped surface |
| 25: Engaging shoulder | 26: Insertion fixing piece |
| 27: Flange part | 28: Bottom part |
| 28a: Bottom fixing protrusion | 29: Bottom protrusion part |
| 30: Sloped and bent piece | 31: Sloped protrusion piece |
| 40: Assistant shoe | a1: Sloped angle of screw thread |
| a[F5]2: Sloped angle of washer | |

**Claims**

1. A loosening prevention washer, comprising:

a washer body part wherein a bolt insertion hole is formed in the center of the washer body part, and a bolt head or a nut is mounted on the upper surface of the washer body part;
an engaging shoulder which is formed on the upper surface of the washer body part in such a way that the corner part of the bolt head or nut is caught by the engaging shoulder when the bolt or nut is rotated in the tightening direction; and
a sloped surface which is formed at the upper surface of the washer body part in such a way that the sloped surface can contact with the bottom surface of the bolt head or nut when the bolt or nut is rotated in the loosening direction, and the bolt head or nut can get on the sloped surface.

2. The washer of claim 1, wherein a plurality of the engaging shoulders and a plurality of the sloped surfaces are formed along a circumferential direction of a circle which can be drawn with a constant radius about the central axis of the bolt insertion hole.

3. The washer of claim 1, wherein the engaging shoulder is formed matching one to one at each corner part of the polygonal bolt head or nut.

4. The washer of claim 1, wherein the sloped surface is formed in such a way that the travel distance in the direction of the bolt screw axis that he bolt head or nut gets on the sloped surface and moves up forward is larger than the travel distance in the direction of the bolt screw axis that the bolt head or nut moves up forward along the screw thread when the bolt or nut is rotated in the loosening direction.

5. The washer of claim 1, wherein the sloped surface includes a sloped surface of a side surface formed out of the line corresponding to the corner part of each bottom surface of the nut, and a bottom sloped surface which is formed extending inside the line corresponding to the corner part of each bottom surface of the nut.

6. The washer of claim 1, wherein the washer body part includes an insertion fixing piece which is formed sloped downward or upward in the direction of the central axis of the bolt insertion hole and is fit into the screw thread of the bolt in a state where the bolt or nut has been tightened.

7. The washer of claim 1, wherein the washer body part includes a flange part formed along the circumference thereof.

8. The washer of claim 1, wherein the washer body part is polygonal.

9. The washer of claim 1, wherein the bottom surface of the washer body part is provided with a bottom protrusion part which is formed protruding downward along the edge thereof.

10. The washer of claim 1, wherein a plurality of bottom fixing protrusions are formed in a pointed shape in the downward direction at the bottom surface of the washer body part.

11. The washer of claim 1, wherein the engaging shoulder and the sloped surface are integrated by a sloped and bent piece which is manufactured in such a way to cut a part of the body part of the washer which is formed in a flat plate shape into a predetermined shape along the corner line of the bolt head or nut, and the cut portion is bent upward.

12. The washer of claim 1, wherein the engaging shoulder and the sloped surface are formed integrate at the upper surface of the body part of the washer formed in a flat plate shape by means of a sloped protrusion piece which protrudes with a predetermined length along the corner line of the bolt head or nut.

Figure 1

Figure 2

Figure 3

Figure 4

Figure 5

Figure 6

Figure 7

Figure 8

(a)

(b)

Figure 9

(a)

(b)

Figure 10

(a)

(b)

Figure 11

(a)

(b)

Figure 12

(a)

(b)

Figure 13

Figure 14

(a)

20 24 25b
25b 22
24
23 21
27

(b)

A 20
24
25b B
24
23 25b
22 27

Figure 15

(a)

(b)

Figure 16

Figure 17

Figure 18

Figure 19

Figure 20

Figure 21

Figure 22

(a)                      (b)

Figure 23

(a)

(b)

Figure 24

(a)

(b)

(c)

(d)

Figure 25

Figure 26

Figure 27

<div style="text-align:center">

**INTERNATIONAL SEARCH REPORT**

</div>

| International application No. |
| --- |
| **PCT/KR2015/008508** |

| A. CLASSIFICATION OF SUBJECT MATTER |
| --- |
| *F16B 39/24(2006.01)i, F16B 39/26(2006.01)i, F16B 43/00(2006.01)i* |
| According to International Patent Classification (IPC) or to both national classification and IPC |

| B. FIELDS SEARCHED |
| --- |
| Minimum documentation searched (classification system followed by classification symbols) |
| F16B 39/24; F16B 39/12; F16B 41/00; F16B 43/00; F16B 25/00; F16B 35/00; F16B 39/26 |
| Documentation searched other than minimum documentation to the extent that such documents are included in the fields searched<br>Korean Utility models and applications for Utility models: IPC as above<br>Japanese Utility models and applications for Utility models: IPC as above |
| Electronic data base consulted during the international search (name of data base and, where practicable, search terms used)<br>eKOMPASS (KIPO internal) & Keywords: washer, bolt, nut, node lock, loose stopping, holding protrusion, inclined plane, fixing protuberance |

| C. DOCUMENTS CONSIDERED TO BE RELEVANT | | |
| --- | --- | --- |
| Category* | Citation of document, with indication, where appropriate, of the relevant passages | Relevant to claim No. |
| Y | JP 2005-164022 A (KAMEMOTO, Toshihiko) 23 June 2005<br>See paragraph [0004] and figures 1-4. | 1-4,6-12 |
| A | | 5 |
| Y | JP 3881889 B2 (YAMAZAKI, Masaki) 14 February 2007<br>See paragraphs [0018], [0047] and figures 2, 7. | 1-4,6-12 |
| Y | JP 2013-019433 A (TOCHIGIYA CO., LTD.) 31 January 2013<br>See abstract and figures 1-2, 7. | 6,8 |
| Y | KR 20-1995-0019567 U (KYEONGDONG MACHINERY CO., LTD.) 24 July 1995<br>See abstract and figure 1. | 7 |
| Y | KR 20-1995-0009279 U (HA, Jae Hyeon) 19 April 1995<br>See abstract and figures 1(na), 3. | 9 |
| Y | KR 10-2006-0002075 A (HYUNDAI MOTOR COMPANY) 09 January 2006<br>See abstract and figure 1. | 10 |
| Y | JP 09-137817 A (SANYO K.K. et al.) 27 May 1997<br>See abstract, paragraphs [0014]-[0018] and figures 3-5. | 11 |

☒ Further documents are listed in the continuation of Box C.     ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 06 NOVEMBER 2015 (06.11.2015) | **06 NOVEMBER 2015 (06.11.2015)** |

| Name and mailing address of the ISA/KR<br>Korean Intellectual Property Office<br>Government Complex-Daejeon, 189 Seonsa-ro, Daejeon 302-701,<br>Republic of Korea<br>Facsimile No. 82-42-472-7140 | Authorized officer<br><br>Telephone No. |
| --- | --- |

Form PCT/ISA/210 (second sheet) (July 2009)

**INTERNATIONAL SEARCH REPORT**

International application No.

**PCT/KR2015/008508**

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2002-031120 A (UEDA, Akemi) 31 January 2002<br>See abstract, paragraphs [0015]-[0020] and figure 1. | 12 |

Form PCT/ISA/210 (continuation of second sheet) (July 2009)

International application No.

**PCT/KR2015/008508**

| Patent document cited in search report | Publication date | Patent family member | Publication date |
|---|---|---|---|
| JP 2005-164022 A | 23/06/2005 | NONE | |
| JP 3881889 B2 | 14/02/2007 | AU 2000-54266 A1<br>US 6966735 B1<br>WO 00-77410 A1 | 02/01/2001<br>22/11/2005<br>21/12/2000 |
| JP 2013-019433 A | 31/01/2013 | JP 5651078 B2 | 07/01/2015 |
| KR 20-1995-0019567 U | 24/07/1995 | KR 20-1996-0010094 Y1 | 22/11/1996 |
| KR 20-1995-0009279 U | 19/04/1995 | KR 20-1996-0010093 Y1 | 22/11/1996 |
| KR 10-2006-0002075 A | 09/01/2006 | NONE | |
| JP 09-137817 A | 27/05/1997 | NONE | |
| JP 2002-031120 A | 31/01/2002 | CN 1276489 A | 13/12/2000 |

Form PCT/ISA/210 (patent family annex) (July 2009)